# EUROPÄISCHE PATENTSCHRIFT

(11) **EP 3 714 747 B1**
(45) Veröffentlichungstag und Bekanntmachung des Hinweises auf die Patenterteilung: **21.02.2024**
(21) Anmeldenummer: 19166082.8
(22) Anmeldetag: 29.03.2019
(51) Int. Cl.: A47J 36/32, A47J 43/07, A47J 27/00

(54) **KÜCHENMASCHINE MIT SIEDEPUNKTERKENNUNG**
KITCHEN APPLIANCE WITH BOILING POINT MONITORING
ROBOT DE CUISINE À DÉTECTION DU POINT D'ÉBULLITION

(43) Veröffentlichungstag der Anmeldung: 30.09.2020
(73) Patentinhaber: Vorwerk & Co. Interholding GmbH, 42270 Wuppertal (DE)
(72) Erfinder: Mosebach, Andrej, 44809 Bochum (DE); Yan, Wenjie, 40549 Düsseldorf (DE); Tietz, Sebastian, 51379 Leverkusen (DE); Kraut-Rheinkober, Stefan, 51375 Leverkusen (DE); Sickert, Michael, 58256 Ennepetal (DE)
(74) Vertreter: Gille Hrabal Partnerschaftsgesellschaft mbB Patentanwälte

(56) Entgegenhaltungen:
- DE-A1-102013 106 691

## Beschreibung

Die Erfindung betrifft eine Küchenmaschine zum Zubereiten einer Speise in einem Topf. Die Küchenmaschine umfasst den Topf, ein Heizelement zum Erhitzen des Topfes oder einer Speise in dem Topf und einen Temperatursensor zum Ermitteln einer Temperatur des Topfes oder einer Speise in dem Topf. Die Erfindung betrifft ferner ein Verfahren.

Bei der Zubereitung einer Speise kommt dem Siedezustand eine besondere Bedeutung zu. Beispielsweise kann die Qualität des Kochergebnisses darunter leiden, wenn eine Speise zu lange oberhalb des Siedepunktes gegart wurde. Bei einem Herd ist aus den Druckschriften US9675199 und US8791399 bekannt, das Sieden von Wasser mit einem Mikrofon und einer Analyse des Mikrofonsignals zu erkennen. Bei dem System Senseboil^{©} der Fa. AEG wird ein Beschleunigungssensor dafür verwendet. Es handelt sich hierbei jedoch ebenfalls um einen Herd und keine Küchenmaschine. Die Druckschrift DE-A-10 2013 106691 offenbart eine Küchenmaschine gemäss Oberbegriff des Anspruchs 1.

Eine Küchenmaschine zum Zubereiten einer Speise in einem Topf der Küchenmaschine weist typischerweise ein Heizelement und einen Temperatursensor auf. Daneben ist allgemein ein Mixwerkzeug zum Mischen und/oder Zerkleinern der Speise in dem Topf vorgesehen. Das Hinzufügen von zusätzlichen Sensoren oder Bauteilen für spezielle Zusatzfunktionen erhöht allgemein den Herstellungsaufwand. Es ist Aufgabe der Erfindung, eine weiterentwickelte Küchenmaschine bereitzustellen. Zur Lösung der Aufgabe dienen eine Küchenmaschine gemäß dem Hauptanspruch sowie ein Verfahren gemäß dem Nebenanspruch. Vorteilhafte Ausführungsformen ergeben sich aus den Unteransprüchen.

Die Aufgabe wird gelöst durch eine Küchenmaschine zum Zubereiten einer Speise in einem Topf. Die Küchenmaschine umfasst den Topf, ein Heizelement zum Erhitzen des Topfes oder einer Speise in dem Topf und einen Temperatursensor zum Ermitteln einer Temperatur des Topfes oder einer Speise in dem Topf. Die Küchenmaschine weist erfindungsgemäß eine Überwachungseinrichtung auf, die so konfiguriert ist, dass die Überwachungseinrichtung auf Basis eines Temperaturmesswertes des Temperatursensors und eines elektrischen Messwertes, der von einer Energiezufuhr zum Heizelement abhängt, ein Überschreiten eines Siedepunktes einer Speise in dem Topf detektieren kann. Eine Küchenmaschine mit Siedepunktdetektion kann auf diese Weise mit besonders geringem Herstellungsaufwand bereitgestellt werden. Zusätzliche Sensoren oder Bauteile, die bei einer Küchenmaschine mit Heizelement und Temperatursensor normalerweise nicht vorgesehen sind, werden nicht benötigt.

Eine Küchenmaschine unterscheidet sich von einem Herd oder einem anderen elektrischen Haushaltsgerät im Küchenbereich dadurch, dass eine Küchenmaschine einen eigenen Topf umfasst. Ferner impliziert eine Küchenmaschine das Vorhandensein eines Werkzeugs der Küchenmaschine zum Bearbeiten einer Speise in dem Topf, z.B. für ein Mischen und/oder Zerkleinern.

Der Temperatursensor und/oder das Heizelement sind insbesondere unmittelbar an dem Topf angebracht, d.h., es besteht ein unmittelbarer Kontakt. Im Falle des Heizelementes kann der Topf so besonders effizient erhitzt werden. Im Falle des Temperatursensors kann so besonders zuverlässig anhand des Temperaturmesswertes eine Temperatur des Topfes oder der Speise in dem Topf ermittelt, d.h. berechnet, werden.

Der Temperaturmesswert und/oder der elektrische Messwert werden in einem definierten und/oder konstanten Zeitintervall bereitgestellt. Der elektrische Messwert beschreibt die elektrische Leistung oder die Stromstärke der elektrischen Energie, die dem Heizelement zugeführt und/oder durch das Heizelement zum Erhitzen verbraucht wird. Die Steuerungseinrichtung steuert die Energiezufuhr zum Heizelement und/oder stellt den elektrischen Messwert bereit. Der Temperaturmesswert und/oder der elektrische Messwert können ein analoges oder digitales Signal sein, das bevorzugt eine Signalverarbeitung durchlaufen hat. Das Zeitintervall ergibt sich aus einer Abtastrate des Temperatursensors, und/oder aus einer Arbeitsfrequenz der Steuerungseinrichtung. Eine Abtastrate des Temperatursensors ist bevorzugt gleich einer Arbeitsfrequenz der Steuerungseinrichtung.

Ein Detektieren des Überschreitens eines Siedepunktes einer Speise gibt einen Hinweis darauf, dass der Siedepunkt zum Zeitpunkt des Detektierens überschritten ist, nachdem der Siedepunkt zuvor noch nicht erreicht worden war. Mit Speise ist eine zumindest teilweise flüssige Speise gemeint. Wenn der Siedepunkt überschritten ist, verdampfen flüssige Bestandteile der Speise.

Siedepunkt bedeutet bekanntlich, dass ab dem Siedepunkt ein Wechsel z.B. von einer flüssigen Phase in eine Dampfphase erfolgt. Bei einer Küchenmaschine ist der Siedepunkt allgemein der Normalsiedepunkt, d.h., der Siedepunkt bei ca. 1 bar. Der Siedepunkt für Wasser liegt bei ca. 100°C.

Die Überwachungseinrichtung kann auf Basis des Temperaturmesswertes und des elektrischen Messwertes ein Überschreiten eines Siedepunktes einer Speise in dem Topf detektieren, d.h., der Temperaturmesswert und der elektrische Messwert sind Eingangsgrößen für die Überwachungseinrichtung.

In einer Ausführungsform ermittelt die Überwachungseinrichtung aus dem Temperaturmesswert und dem elektrischen Messwert einen Störgrößenwert, der mit einem Wärmeverlust korreliert. Der Wärmeverlust, von dem der Störgrößenwert abhängig ist, wird durch ein Sieden einer Speise in dem Topf verursacht, d.h., durch ein Überschreiten eines Siedepunktes. Eine Siedepunktüberwachung kann somit anhand eines berechneten Wertes erfolgen und die Küchenmaschine mit geringem Herstellungsaufwand bereitgestellt werden. Wärmeverlust meint, dass Energie für ein Erwärmen zwar zugeführt wird, aber wegen einer Phasenumwandlung nicht oder nicht entsprechend erwärmt.

Solange während einer Speisenzubereitung kein flüssiger Bestandteil der Speise siedet, entsteht kein Wärmeverlust durch Sieden und der Störgrößenwert ist gleich Null. Wenn die Temperatur eines flüssigen Bestandteils der Speise den Siedepunkt (also die Siedetemperatur) erreicht, dann wird die Wärmeleistung des Heizelements, die dem Topf bzw. der Speise dann weiter durch das Heizelement zugeführt wird, durch das Sieden wieder entzogen. Grundsätzlich kann es vorkommen, dass nach Überschreiten des Siedepunktes die gesamte weiter zugeführte Wärmeleistung des Heizelements durch das Sieden wieder entzogen wird. Die zugeführte Wärmeleistung wird dann grundsätzlich komplett zur Phasenumwandlung von einer flüssigen Phase in eine Dampfphase eines flüssigen Bestandteils der Speise aufgewendet bzw. verbraucht.

Die durch das Sieden entzogene Wärmeleistung ist der Wärmeverlust, mit dem der Störgrößenwert korreliert. Der Störgrößenwert nimmt folglich nach Überschreiten des Siedepunktes einen Wert an, der von null verschieden ist. Im Folgenden wird eine Veränderung des Störgrößenwerts ausgehend von Null infolge eines Wärmeverlustes durch Sieden als ein Anstieg bezeichnet. Je nach Signalverarbeitung und gewählten Multiplikatoren und deren Vorzeichen kann der Anstieg und ein Überschreiten eines Siedepunktes sowohl in Richtung größer werdender positiver Werte gerichtet sein als auch in die entgegengesetzte Richtung einer Werteskala.

In einer Ausführungsform überwacht die Überwachungseinrichtung oder eine Überwachungseinheit der Überwachungseinrichtung den Störgrößenwert, um ein Überschreiten des Siedepunktes einer Speise in dem Topf zu detektieren. Eine Küchenmaschine kann so mit besonders geringem Aufwand hergestellt werden. Insbesondere erfolgt die Überwachung mithilfe eines Schwellwertes, so dass ein Überschreiten des Siedepunktes detektiert wird, wenn der Störgrößenwert den Schwellwert erreicht.

In einer Ausführungsform ist der Störgrößenwert idealerweise Null, wenn der Siedepunkt nicht überschritten ist. Die Wärmezufuhr durch das Heizelement führt dann zu einer Temperatur, die näherungsweise eintritt, wenn kein Wärmeverlust durch Sieden erfolgt. Idealerweise meint, dass Fehler aus externen Einflüssen und anderen Abweichungen zwischen Theorie und Praxis von dieser Betrachtung ausgenommen wurden oder durch Parameter ohne Fehler berücksichtigt wurden.

In einer Ausführungsform bildet die Überwachungseinrichtung mithilfe eines Algorithmus oder eines Gleichungssystems ein thermisches System ab, bei dem eine Wärmezufuhr durch das Heizelement zu einer Erhöhung der Temperatur abzüglich des Störgrößenwerts führt. Eine Siedepunktdetektion ist so mit geringem Aufwand möglich. Die Wärmezufuhr durch das Heizelement wird durch den elektrischen Messwertes, der von einer Energiezufuhr zum Heizelement abhängt, beschrieben. Die Erhöhung der Temperatur entspricht einer Änderung, die aus zwei zeitlich aufeinander folgenden Temperaturmesswerten bestimmt werden kann, insbesondere durch Differenzbildung.

In das Gleichungssystem bzw. den Algorithmus können Eingangsgrößen eingegeben und auf Basis der Eingangsgrößen mindestens eine Ausgangsgröße erhalten werden. Die Eingangsgrößen sind Variablen, die im Einsatz mit Zahlenwerten ersetzt werden. Mithilfe des Gleichungssystems bzw. mithilfe des Algorithmus wird somit auf Basis der Zahlenwerte der Eingangsgrößen ein Zahlenwert für die Ausgangsgröße erhalten. In einer Ausgestaltung umfasst das Gleichungssystem bzw. der Algorithmus eine Vielzahl von Koeffizienten. Bevorzugt sind alle oder die überwiegende Anzahl von Eingangsgrößen mit einem eigenen Koeffizienten multiplikativ verknüpft. Vorzugsweise gibt es weitere Koeffizienten, die multiplikativ mit einer gebildeten Differenz von zwei Eingangsgrößen verknüpft sind. Insbesondere sind die Koeffizienten Systemparameter für eine Wärmeleitfähigkeit, einen Wärmeübergang, eine spezifische Wärmekapazität, ein Flächenmaß beispielsweise des Topfbodens und/oder ein Volumen beispielsweise eines durch den Topf definierten Raums. Vorzugsweise sind die Koeffizienten fest definiert und werden im Einsatz nicht mehr verändert. In einer Ausgestaltung ist mindestens ein Koeffizient vorgesehen, der an einen Kochvorgang angepasst werden kann.

Das thermische System ist insbesondere so definiert, dass eine zugeführte Wärmeleistung durch das Heizelement zu einer Temperaturerhöhung des Topfes und/oder der Speise in dem Topf führt. Externe Einflüsse werden beim dem System entweder durch Parameter berücksichtigt oder aus der Betrachtung ausgenommen. Externe Einflüsse sind z.B. ein Wärmeentzug durch eine kühlere Umgebung oder eine Wärmezufuhr durch Zuführen einer bereits erhitzten Zutat in den Topf.

In einer Ausführungsform wird der Algorithmus oder das Gleichungssystem in zeitlich aufeinander folgenden Zyklen angewendet. Dies ermöglicht die Nutzung von Ausgangsgrößen eines aktuellen Zyklus als Eingangsgrößen für einen nächsten Zyklus. Der Aufwand zum Bereitstellen einer Küchenmaschine mit Siedepunktdetektion kann so reduziert werden. Insbesondere entspricht der zeitliche Abstand zwischen zwei Zyklen dem oben erwähnten Zeitintervall.

In einer Ausführungsform werden der Temperaturmesswert eines aktuellen Zyklus und der elektrische Messwert eines aktuellen Zyklus sowie ein Störgrößenwert, der im vorhergehenden Zyklus mithilfe des Algorithmus oder des Gleichungssystems ermittelt wurde, als Eingangsgrößen zum Ermitteln des Störgrößenwerts verwendet, die im aktuellen Zyklus überwacht wird, um ein Überschreiten des Siedepunktes einer Speise in dem Topf zu detektieren, insbesondere durch die Überwachungseinheit. Eine Siedepunktdetektion ist so mit geringem Aufwand möglich. Insbesondere ist der Störgrößenwert, der im aktuellen Zyklus überwacht wird, und der Störgrößenwert, der im vorhergehenden Zyklus ermittelt wurde, durch den gleichen Algorithmus oder das gleiche Gleichungssystem berechnet worden.

In einer Ausführungsform umfasst die Überwachungseinrichtung eine Prädiktionswert-Ermittlungseinheit, die einen Prädiktions-Störgrößenwert, einen Prädiktions-Temperaturmesswert, einen Prädiktions-Topftemperaturwert und/oder einen Prädiktions-Speisentemperaturwert als Prädiktions-Ausgangsgrößen ermittelt. Durch das Vorsehen mehrerer Prädiktions-Ausgangsgrößen kann das System verbessert abgebildet und eine Küchenmaschine mit geringem Herstellungsaufwand erhalten werden. Insbesondere wird der Prädiktions-Störgrößenwert des nächsten Zyklus gleich dem Prädiktions-Störgrößenwert des aktuellen Zyklus gesetzt, d.h. š^{P}(k+1) = š(k). Insbesondere wird der Prädiktions-Temperaturmesswert Ť^{P}_{NTC}(k+1) des nächsten Zyklus k+1 auf Basis des elektrischen Messwertes u(k) des aktuellen Zyklus k und/oder von Eingangsgrößen nur des aktuellen Zyklus k bestimmt. Bevorzugt sind die Eingangsgrößen ein Schätz-Temperaturmesswert Ť_{NTC}(k) und/oder eine Differenz Ť_{SUR}(k) - Ť_{NTC}(k) eines Schätz-Topftemperaturwertes Ť_{SUR}(k) und dem Schätz-Temperaturmesswert Ť_{NTC}(k).

In einer Ausführungsform umfasst die Überwachungseinrichtung eine Korrekturwert-Ermittlungseinheit, die einen Korrektur-Störgrößenwert (š^{K}(k+1)), einen Korrektur-Temperaturmesswert (Ť^{K}_{NTC}(k+1)), einen Korrektur-Topftemperaturwert (Ť^{K}_{SUR}(k+1)) und/oder einen Korrektur-Speisentemperaturwert (Ť^{K}_{MED}(k+1)) als Korrektur-Ausgangsgrößen ermittelt. Durch die Korrekturwert-Ermittlungseinheit wird ein an die tatsächlichen Gegebenheiten des Systems angepasster Störgrößenwert š(k+1) für die Überwachung genutzt und eine Siedepunktdetektion mit geringem Aufwand erhalten. Insbesondere wird der Korrektur-Störgrößenwert des nächsten Zyklus und/oder alle Korrektur-Ausgangsgrößen des nächsten Zyklus k+1 auf Basis des Temperaturmesswertes T_{NTC}(k) des aktuellen Zyklus k und/oder von Eingangsgrößen nur des aktuellen Zyklus k bestimmt. Bevorzugt ist eine Eingangsgröße ein Schätz-Temperaturmesswert Ť_{NTC}(k). Vorzugsweise werden alle Korrektur-Ausgangsgrößen auf Basis einer Differenz T_{NTC}(k) - Ť_{NTC}(k) des Temperaturmesswertes T_{NTC}(k) und dem Schätz-Temperaturmesswert Ť_{NTC}(k) berechnet.

In einer Ausführungsform umfasst die Überwachungseinrichtung eine Schätzwert-Ermittlungseinheit, die einen geschätzten Störgrößenwert š(k+1), einen Schätz-Temperaturmesswert Ť_{NTC}(k+1), einen Schätz-Topftemperaturwert Ť_{SUR}(k+1) und/oder einen Schätz-Speisentemperaturwert Ť_{MED}(k+1) als Schätz-Ausgangsgrößen ermittelt. Insbesondere sind alle Eingangsgrößen und/oder alle Schätz-Ausgangsgrößen vom nächsten Zyklus k+1. Die Schätz-Ausgangsgrößen der Schätzwert-Ermittlungseinheit bilden also Eingangsgrößen für den nächsten Zyklus, insbesondere für die Prädikationswert-Ermittlungseinheit und/oder die Korrekturwert-Ermittlungseinheit. Vorzugsweise wird der Schätz-Temperaturmesswert Ť_{NTC}(k+1) auf Basis des Prädiktions-Temperaturmesswerts Ť^{P}_{NTC}(k+1) und des Korrektur-Temperaturmesswerts Ť^{K}_{NTC}(k+1) ermittelt, insbesondere durch Bilder der Summe der vorgenannten beiden Eingangsgrößen. Vorzugsweise wird der Schätz-Topftemperaturwert Ť_{SUR}(k+1) auf Basis des Prädiktions-Topftemperaturwerts Ť^{P}_{SUR}(k+1) und des Korrektur-Topftemperaturwerts Ť^{K}_{SUR}(k+1) ermittelt, insbesondere durch Bilden der Summe der vorgenannten beiden Eingangsgrößen. Vorzugsweise wird der Schätz-Speisentemperaturwert Ť_{MED}(k+1) auf Basis des Prädiktions-Speisentemperaturwerts Ť^{P}_{MED}(k+1) und des Korrektur-Speisentemperaturwerts Ť^{K}_{MED}(k+1) ermittelt, insbesondere durch Bilden der Summe der vorgenannten beiden Eingangsgrößen.

In einer Ausführungsform ist der Störgrößenwert der geschätzte Störgrößenwert š(k+1). Der Störgrößenwert, der zum Detektieren eines Überschreitens des Siedepunktes überwacht wird, wurde also von der Schätzwert-Ermittlungseinheit berechnet. Bevorzugt wird der geschätzte Störgrößenwert š(k+1) für den nächsten Zyklus, der in dem aktuellen Zyklus von der Überwachungseinheit zur Überwachung genutzt wird, von der Schätzwert-Ermittlungseinheit durch das Aufsummieren von dem Prädiktions-Temperaturmesswert Ť^{P}_{NTC}(k+1) der Prädiktionswert-Ermittlungseinheit und dem Korrektur-Temperaturmesswert Ť^{K}_{NTC}(k+1) der Korrekturwert-Ermittlungseinheit ermittelt.

In einer Ausführungsform bildet die mindestens eine Prädiktions-Ausgangsgröße x̂^{P}(k+1) der Prädiktionswert-Ermittlungseinheit und/oder die mindestens eine Korrektur-Ausgangsgröße x̂^{K}(k+1) der Korrekturwert-Ermittlungseinheit die mindestens eine Eingangsgröße für die Schätzwert-Ermittlungseinheit. Vorzugsweise sind mehrere Prädiktions-Ausgangsgrößen x̂^{P}(k+1) und/oder mehrere Korrektur-Ausgangsgrößen x̂^{K}(k+1) vorgesehen. Mehrere Prädiktions-Ausgangsgrößen x̂^{P} bzw. mehrere Korrektur-Ausgangsgrößen x̂^{K} bzw. mehrere Schätz-Ausgangsgrößen x̂ bilden jeweils eine Menge von Ausgangsgrößenwerten. Eine solche Menge kann (in der linearen Algebra) als Vektor bezeichnet werden, der mehrere Werte als Elemente beinhaltet.

In einer Ausführungsform entspricht der Störgrößenwert š(k+1) einer Summe des Prädiktions-Störgrößenwerts š^{P}(k+1) und des Korrektur-Störgrößenwerts š^{K}(k+1). Eine Siedepunkterkennung kann so mit geringem Aufwand realisiert werden.

In einer Ausführungsform umfasst die Überwachungseinrichtung eine Überwachungseinheit, die so konfiguriert ist, dass die Überwachungseinheit den Störgrößenwert zur Detektion eines Überschreitens des Siedepunkts überwacht und/oder auf Basis des Störgrößenwerts eine Dampfrate ermittelt. Eine Küchenmaschine mit einer Überwachung des Siedens einer Speise während der Speisenzubereitung kann so mit geringem Aufwand hergestellt werden.

Eine Dampfrate gibt die Menge von Dampf an, die von der Speise in dem Topf pro Zeiteinheit abgegeben wird.

Insbesondere erfolgt das Ermitteln der Dampfrate durch die Überwachungseinheit. Vorzugsweise wird die Dampfrate anhand einer Amplitude des Störgrößenwertes ermittelt. Dieser Ausgestaltung liegt die Erkenntnis zugrunde, dass die Amplitude des Störgrößenwertes mit der Dampfrate korreliert.

In einer Ausgestaltung ist die Überwachungseinheit so konfiguriert, dass die Überwachungseinheit ein Erreichen des Siedepunktes detektiert, indem eine Ableitung des Störgrößenwertes über der Zeit berechnet und mit einem Sollprofil verglichen wird. In einer Ausgestaltung ist das Sollprofil derart definiert, dass ein Überschreiten des Siedepunktes detektiert wird, wenn die Ableitung des Störgrößenwertes für eine Mindestdauer oberhalb einer Untergrenze liegt.

Ein weiterer Aspekt der Erfindung betrifft ein Verfahren zum Überwachen einer Zubereitung einer Speise in einem Topf mithilfe einer Küchenmaschine, gemäss Anspruch 15.

Nachfolgend werden Ausführungsbeispiele der Erfindung auch anhand von Figuren näher erläutert. Die beanspruchten Schutzbereiche sind nicht auf die Ausführungsbeispiele beschränkt.

Es zeigen:
- Figur 1:: Schematische Darstellung einer Küchenmaschine;
- Figur 2:: Ablaufdiagramm zur Ermittlung eines Störgrößenwerts;
- Figur 3:: Exemplarische Ausgangsgrößen und Eingangsgrößen der Fig. 2;
- Figur 4a:: Gleichungssystem der Prädiktionswert-Ermittlungseinheit;
- Figur 4b:: Gleichungssystem der Korrekturwert-Ermittlungseinheit;
- Figur 4c:: Gleichungssystem der Schätzwert-Ermittlungseinheit;
- Figur 5:: Messkurven des Temperaturmesswertes und des elektrischen Messwertes;
- Figur 6:: Verlauf der Störgrößenwerte über die Zeit, die auf Basis der Temperaturmesswerte und der elektrischen Messwerte der Fig. 5 gemäß dem Ablaufdiagramm der Figur 2 ermittelt wurden.

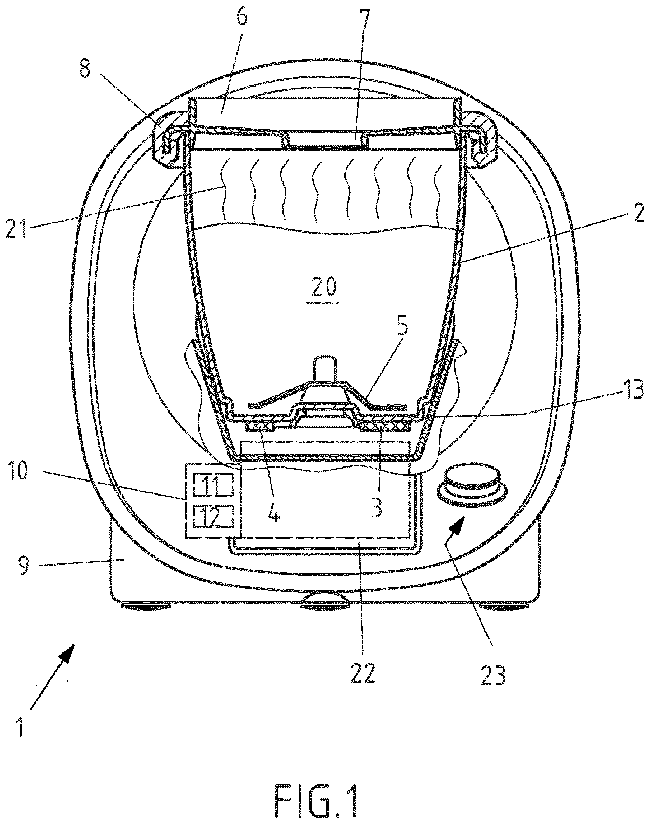

Die Figur 1 zeigt eine Küchenmaschine 1 mit einem Topf 2 zum Aufnehmen einer Speise 20, die flüssige Bestandteile enthält oder flüssig ist. Der Topf 2 kann durch einen Deckel 6 mit einer Deckelöffnung 7 abgedeckt werden. Eine nicht dargestellte Öffnungsabdeckung kann vorgesehen werden, um die Deckelöffnung 7 lose abzudecken, so dass stets Dampf 21 aus dem Topf 2 austreten kann. Der Deckel 6 kann mithilfe einer Verriegelung 8 auf dem Topf verriegelt werden. Ein drehbares Werkzeug 5 zum Zerkleinern und/oder Mischen ist am Topfboden 13 vorgesehen. Ein Gehäuse 9 der Küchenmaschine 1 nimmt den Topf 2 stabil auf. Ein Display 22 und eine Benutzerschnittstelle 23 ermöglichen die Wechselwirkung mit einem Benutzer. Eine Steuerungseinrichtung 10 mit einem Prozessor 11 und einem Speicher 12 sind vorgesehen, um die Küchenmaschine zu steuern. Insbesondere an einer Unterseite des Topfbodens, der normalerweise nicht mit einer Speise in Kontakt kommt, sind ein Heizelement 3 und ein Temperatursensor 4 angeordnet, bevorzugt ungefähr mittig zwischen einem Mittelpunkt des Topfbodens und einem Außenumfang. Vorzugsweise stehen das Heizelement 3 und/oder der Temperatursensor 4 in direktem Kontakt mit dem Topf 2, speziell mit dem Topfboden 13. Bevorzugt sind das Heizelement 3 und der Temperatursensor 4 gegenüberliegend auf beiden Seiten des Mittelpunktes des Topfbodens angeordnet. Der Topf 2 ist aus Metall. Vorzugsweise handelt es sich bei dem Temperatursensor 4 um einen Thermistor mit negativem Temperaturkoeffizient.

Beim normalen Erhitzen einer flüssigen Speise 20 in dem Topf 2 ohne massive Verdampfung bewirkt das Zuführen von Wärmeleistung durch das Heizelement 3 einen Anstieg der Temperatur in der Speise. Wird die Speise 20 in dem Topf 2 soweit erhitzt, dass die Temperatur der flüssigen Bestandteile der Speise 20 ihren Siedepunkt erreicht, dann wird die weiter zugeführte Wärmeleistung vollständig in einen Massentransport bzw. eine Phasenumwandlung von flüssig in dampfförmig umgewandelt, während die Temperatur konstant bleibt. Die Flüssigkeit verdampft folglich. Dieser spontane Wechsel in der Energieumwandlung wird wie im Folgenden beschrieben genutzt, um ein Sieden von flüssigen Bestandteilen der Speise 20 zu detektieren.

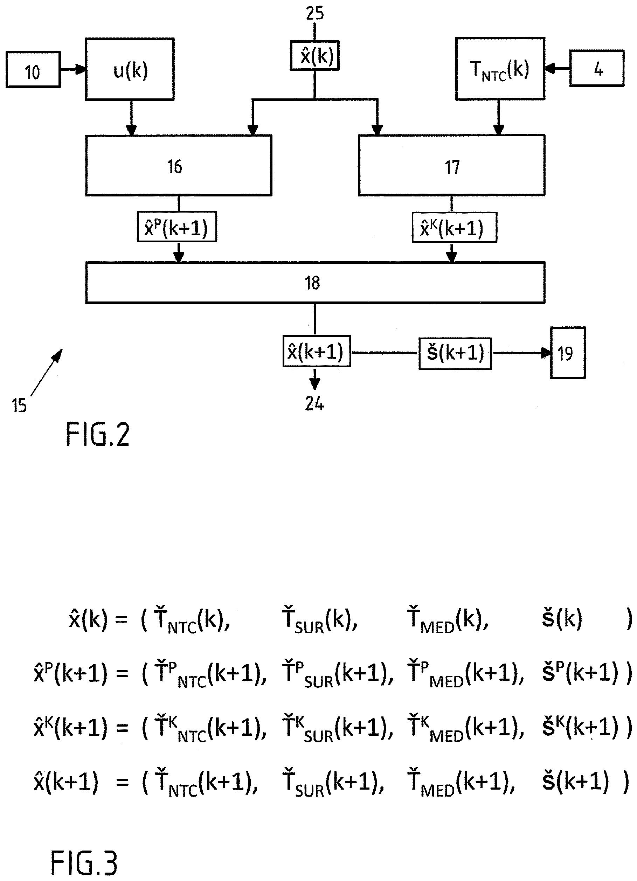

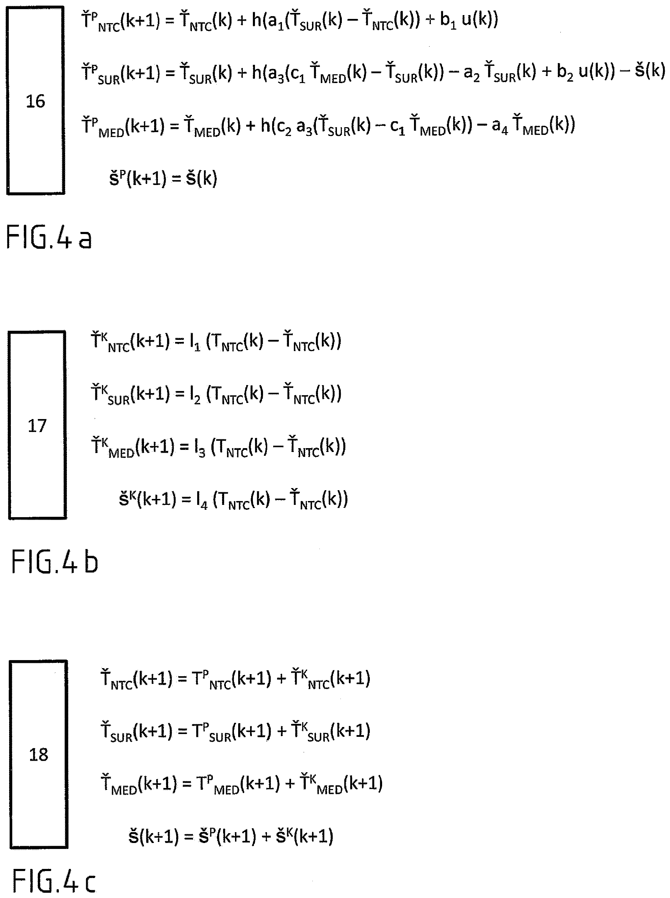

Die Figur 2 zeigt ein Ablaufdiagramm, das in eine Überwachungseinrichtung 15 implementiert ist. Die Überwachungseinrichtung 15 umfasst eine Prädiktionswert-Ermittlungseinheit 16, eine Korrekturwert-Ermittlungseinheit 17 und eine Schätzwert-Ermittlungseinheit 18, die wie in Figur 2 dargestellt eingesetzt werden, um einen geschätzten Störgrößenwert š(k+1) zu ermitteln. Das Gleichungssystem bzw. der Algorithmus, der durch das Ablaufdiagramm (insbesondere in Verbindung mit den Formeln der Figuren 3, 4a, 4b und 4c) beschrieben ist, wird für einen aktuellen Zyklus k durchlaufen. Zu Beginn 25 des Ablaufdiagramms entsprechen die Schätz-Ausgangsgrößen des letzten Zyklus den Eingangsgrößen x̂(k) des aktuellen Zyklus. Daneben werden für einen aktuellen Zyklus kein Temperaturmesswert T_{NTC}(k) vom Temperatursensor 4 und ein elektrischer Messwert u(k), bevorzugt die aktuelle Betriebsstromleistung des Heizelements 3, von der Steuerungseinrichtung 10 an die Überwachungseinrichtung 15 übermittelt bzw. verfügbar gemacht. Der elektrische Messwert u(k) stellt dabei eine Eingangsgröße für die Prädiktionswert-Ermittlungseinheit 16 und/oder der Temperaturmesswert T_{NTC}(k) eine Eingangsgröße für die Korrekturwert-Ermittlungseinheit 17 dar. Von den geschätzten Eingangsgrößen x̂(k), die im letzten Zyklus k-1 ermittelt wurden, stellen insbesondere der Schätz-Temperaturmesswert Ť_{NTC}(k), der Schätz-Topftemperaturwert Ť_{SUR}(k) und/oder der Schätz-Speisentemperaturwert Ť_{MED}(k) Eingangsgrößen für die Prädiktionswert-Ermittlungseinheit 16 dar, wie die Figuren 3 und 4a zeigen. Von den geschätzten Eingangsgrößen x̂(k), die im letzten Zyklus k-1 ermittelt wurden, stellt insbesondere der Schätz-Temperaturmesswert Ť_{NTC}(k) eine Eingangsgröße für die Korrekturwert-Ermittlungseinheit 17 dar, wie die Figuren 3 und 4b zeigen. Die durch die Prädiktionswert-Ermittlungseinheit 16 ermittelten Prädiktions-Ausgangsgrößen x̂^{P}(k+1) und die durch die Korrekturwert-Ermittlungseinheit 17 ermittelten Korrektur-Ausgangsgrößen x̂^{K}(k+1), die exemplarisch in Fig. 3 gezeigt sind, stellen die Eingangsgrößen für die Schätzwert-Ermittlungseinheit 18 dar. Durch das Durchlaufen des Gleichungssystems bzw. durch den Algorithmus werden die Schätz-Ausgangsgrößen x̂(k+1) für den nächsten Zyklus k+1 ermittelt. Die Schätz-Ausgangsgrößen x̂(k+1), die insbesondere vektorartig eine Menge verschiedener Elemente als Ausgangsgrößen beinhaltet, werden von der Schätzwert-Ermittlungseinheit 18 berechnet. Vor dem Ende 24 des aktuellen Zyklus k wird der geschätzte Störgrößenwert š(k+1), der ein Element der Menge x̂(k+1) ist, an die Überwachungseinheit 19 übermittelt, um auf Basis des geschätzten Störgrößenwerts š(k+1) eine Siedepunkt-Detektion und alternativ oder ergänzend eine DampfratenErmittlung für den aktuellen Zyklus k durchzuführen. Am Ende 24 des Ablaufdiagramms bilden die Schätz-Ausgangsgrößen x̂(k+1) die Eingangsgrößen des nächsten Zyklus k+1 und der gleiche Algorithmus bzw. das gleiche Gleichungssystem wird erneut durchlaufen. Im nächsten Zyklus k+1 wird also ein geschätzter Störgrößenwert š(k+2) berechnet und für die Überwachung durch die Überwachungseinheit 19 des nächsten Zyklus k+1 verwendet. Beim Starten der Küchenmaschine 1 oder beim Beginnen eines Speisenzubereitungsvorgangs werden für den allerersten Zyklus anstelle der Schätz-Ausgangsgrößen x̂(k) des letzten Zyklus k-1 vordefinierte, gespeicherte Initialwerte x̂(0) eingesetzt.

Die Figur 3 zeigt exemplarische Prädiktions-Ausgangsgrößen x̂^{P}(k+1), Korrektur-Ausgangsgrößen x̂^{K}(k+1) sowie Schätz-Ausgangsgrößen x̂(k) des letzten Zyklus und Schätz-Ausgangsgrößen x̂(k+1) des aktuellen Zyklus k. Auf die einzelnen Elemente wird in den Fig. 4a, 4b und 4c näher eingegangen.

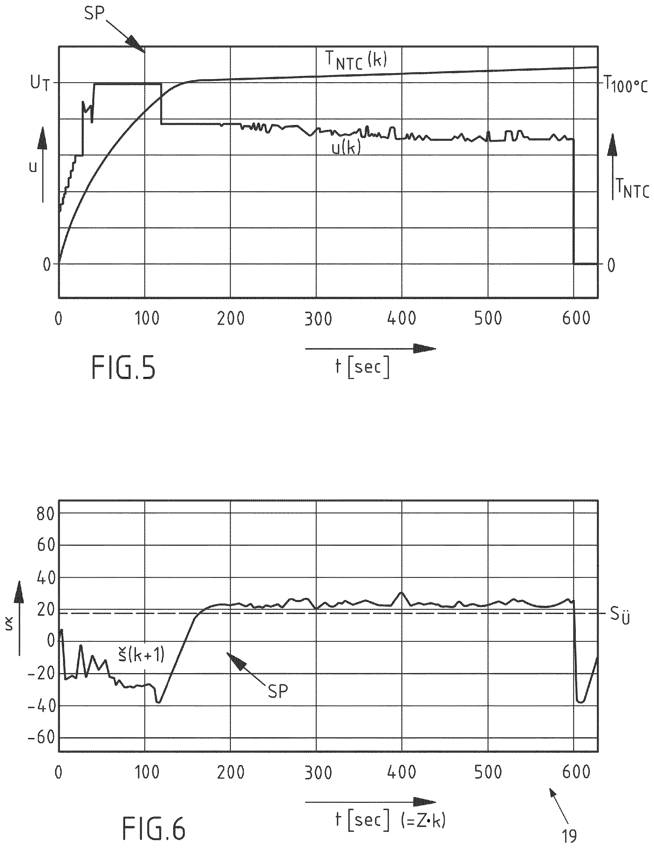

In den Formeln der Figuren 4a, 4b und 4c spiegelt sich ein mathematisches Modell wieder, das den Zusammenhang zwischen zugeführter Wärmeleistung in Form des elektrischen Messwertes u(k), des Temperaturmesswertes T_{NTC}(k) des Temperatursensors 4, einer Temperatur an der Topfbodenoberfläche T_{SUR}(k), der Speisentemperatur T_{MED}(k) und einem Wärmeverlust in Form eines Störgrößenmesswertes š(k) beschreibt, der wie in der Figur 6 gezeigt im Falle eines Überschreitens des Siedepunktes SP insbesondere sprungförmig erfolgt. Bei einem Speisenzubereitungsvorgang, bei dem die flüssige Speise nicht siedet, ist der Störgrößenwert š(k) gleich Null. Wenn die Temperatur der Speise den Siedepunkt bzw. die Siedetemperatur erreicht, dann wird die weiter zugeführte Wärmeleistung dem System durch das Sieden regelmäßig komplett entzogen, was durch einen Störgrößenwert š (k) beschrieben wird, der ungleich Null ist. Bevorzugt ist das mathematische Modell zur Beschreibung dieses vereinfachten, physikalischen Systems in der Prädiktionswert-Ermittlungseinheit umgesetzt.

Wie Figur 4a zeigt, wird der Prädiktions-Temperaturmesswert Ť^{P}_{NTC}(k+1) ausgehend vom letzten Schätz-Temperaturmesswert Ť_{NTC}(k) ermittelt, wobei die Wärmezufuhr durch das Heizelement durch den elektrischen Messwert u(k) sowie ein Wärmeaustausch zwischen dem Temperatursensor 4 und dem Topf 2 an deren Grenzfläche durch die Temperaturdifferenz Ť_{SUR}(k) - Ť_{NTC}(k) berücksichtigt wird. Analog dazu sind auch die übrigen Formeln aufgebaut, die stets von der jeweiligen, letzten Schätz-Temperatur ausgehen und die unterschiedlichen Einflüsse aus Wärmezufuhr direkt oder indirekt über das Heizelement 3, Einflüsse aus einem Wärmetausch an einer Grenzfläche sowie Einflüsse aus Wärmeabgabe an die Umgebung berücksichtigen. Die Koeffizienten a1, a2, a3, b1, b2, c1, c2 und h sind entsprechend zur Berücksichtigung von Parametern wie Wärmeleitfähigkeit, Wärmeübergangskoeffizienten, Flächenmaß und/oder Volumen, die von dem Aufbau des Topfbodens 13 und von den Eigenschaften der Speise abhängig sind, vorgesehen.

Das Sieden der flüssigen Speise 20 kann detektiert werden, indem zunächst der Gesamtzustand des Topfes 2 durch die Prädiktionswert-Ermittlungseinheit 16 vorhergesagt wird. Anschließend wird der gemessene Temperaturmesswert T_{NTC}(k) mit dem vorhergesagten Temperaturmesswert Ť_{NTC}(k) durch die Korrekturwert-Ermittlungseinheit 17 verglichen und entsprechende Abweichungen als Korrektur-Ausgangsgrößen x̂^{K}(k+1) bereitgestellt, die im nächsten Schritt von der Schätzwert-Ermittlungseinheit 18 zur Korrektur der vorhergesagten Werte der Prädiktionswert-Ermittlungseinheit 16 genutzt werden. Die Koeffizienten I₁, I₂, I₃ und I₄ gewichten dabei den Einfluss der Aufweichung auf den jeweiligen Korrektur-Temperaturwert Ť^{K}_{NTC}, Ť^{K}_{SUR}, Ť^{K}_{MED}, und dem Korrektur-Störgrößenwert š^{K}.

Das Wiederholen dieses Vorgehens und Durchlaufen des Ablaufdiagrams der Fig. 2 für eine Vielzahl von Zyklen über die Zeit führt dazu, dass die Abweichungen zwischen dem Verhalten des realen Systems und dem Systemmodell der Prädiktionswert-Ermittlungseinheit 16 schrittweise kleiner werden und die vorhergesagten Temperaturen der Prädiktionswert-Ermittlungseinheit 16 folglich dem realen System immer näher kommen. Auch die nicht gemessenen Temperaturen T_{SUR} des Topfes 2 bzw. des Topfbodens 15 und T_{MED} der Speise können durch die oben beschriebene Vorgehensweise näherungsweise berechnet, also geschätzt werden. Somit kann auf Basis einer Art berechneten Schätzung des Störgrößenwerts š(k+1) ermittelt werden, ob dem System Wärmeenergie entzogen wird, die nicht zu einer Erhöhung des Temperaturmesswertes T_{NTC} führt, was auf ein Sieden der Speise 20 und damit auf ein Überschreiten des Siedepunkts hinweist.

Die Figur 5 zeigt einen Beispielverlauf, bei dem 200g Wasser als die Speise 20 auf eine Temperatur von 105°C erhitzt wird. Ein Sieden beginnt ab einer Siedetemperatur T_{100°C} von 100°C. Im Verlauf des Experiments begann das Wasser ungefähr ab dem Zeitpunkt t = 120 Sekunden an zu sieden. Dazu wurde die Betriebsstromleistung, mit dem das Heizelement versorgt wurde, zu Anfang auf den Wert u_{T} angehoben ungefähr am Siedepunkt SP wieder etwas abgesenkt.

Die Figur 6 zeigt für das Experiment der Figur 5 den ermittelten geschätzten Störgrößenwert š(k+1) über die Zeit t. Das Zeitintervall Z zwischen zwei aufeinander folgenden Zyklen k ist so gering, dass die einzelnen geschätzten Störgrößenwerte š(k+1) einen stetigen Kurvenverlauf bilden. Wie auch in Figur 5 ist die Zeit t gleich dem Produkt von dem Zeitintervall Z und dem Zyklus k. Beim Überschreiten des Siedepunktes SP ist, wie mit dem Pfeil in Fig. 6 markiert, deutlich zu erkennen, dass es zu einer sprungförmigen Energieentnahme im System kommt. Mithilfe eines Schwellwertes S_{Ü} kann folglich das Überschreiten des Siedepunktes mit geringem Aufwand erkannt werden. Alternativ oder ergänzend kann die Amplitude des Signals des geschätzten Störgrößenwertes š(k+1) zur Ermittlung der dazu korrelierenden Dampfrate genutzt werden. Je größer die Amplitude ist, desto höher ist die Dampfrate.

Wenn die oben beschriebene Überwachungseinrichtung 15 das Systemverhalten vollständig und ohne Fehler beschreiben würde, dann wäre der geschätzte Störgrößenwert š(k+1) grundsätzlich bis zum Zeitpunkt des Siedens Null und könnte zum Siedezeitpunkt auf einen festen Wert größer 0 springen. Da das Modell das physikalische Verhalten aber nicht vollständig beschreibt und es einen Fehler gibt, kommt es zu den sichtbaren Abweichungen und Schwankungen im Kurvenverlauf der Fig. 6. Wie zu sehen ist, funktioniert die Detektion des Überschreitens des Siedepunktes trotz der vorhandenen Abweichungen und Fehler. Der Grund ist, dass der Einfluss der Energieentnahme beim Sieden größer ist als die Auswirkung der Abweichungen und Fehler.

In einer Ausgestaltung ist die Steuerungseinrichtung 10 so konfiguriert, dass in Abhängigkeit von dem detektierten Zeitpunkt des Überschreitens des Siedepunktes eine automatische Änderung einer Zieltemperatur vorgenommen wird, der Benutzer über das Display 22 dazu aufgefordert wird, eine bestimmte Zutat hinzuzufügen und/oder den Speisenzubereitungsvorgang zu beenden. Insbesondere können gespeicherte Rezepte mit einem vergrößerten Automatisierungsgrad durchgeführt werden. Ferner kann eine Intensität des Siedens (Dampfrate) gezielt eingestellt werden und/oder der Kochvorgang ohne Kenntnis der Menge der Speise in dem Topf 2 zu einem Zeitpunkt beendet werden, der eine besonders hohe Qualität des Kochergebnisses bewirkt.

Es werden keine zusätzlichen Sensoren oder mechanische Komponenten für die oben beschriebenen Funktionalitäten benötigt, so dass eine Küchenmaschine mit Siedepunktüberwachung und/oder Dampfratenermittlung mit besonders geringem Herstellungsaufwand bereitgestellt werden kann.

## Patentansprüche

1. Küchenmaschine (1) zum Zubereiten einer Speise (20) in einem Topf (2), wobei die Küchenmaschine (1) den Topf (2), ein Heizelement (3) zum Erhitzen des Topfes (2) oder einer Speise (20) in dem Topf (2) und einen Temperatursensor (4) zum Ermitteln einer Temperatur des Topfes (2) oder einer Speise (20) in dem Topf (2) umfasst, wobei die Küchenmaschine (1) eine Überwachungseinrichtung (15) aufweist, die so konfiguriert ist, dass die Überwachungseinrichtung (15) auf Basis eines Temperaturmesswertes (T_{NTC}(k)) des Temperatursensors (4) und eines elektrischen Wertes (u(k)) der Energiezufuhr zum Heizelement (3), durch den die Wärmezufuhr durch das Heizelement (3) berücksichtigt wird, ein Überschreiten eines Siedepunktes (SP) einer Speise (20) in dem Topf (2) detektiert,
**dadurch gekennzeichnet, dass**
die Küchenmaschine (1) eine Steuerungseinrichtung (10) zum Steuern der Energiezufuhr zum Heizelement (2) umfasst und so eingerichtet ist, dass der Wert (u(k)) der Energiezufuhr zum Heizelement (3) ein in einem definierten oder konstanten Zeitintervall (Z) an die Überwachungseinrichtung (15) bereitgestellter Messwert (u(k)) der elektrischen Leistung oder Stromstärke ist, wobei sich das Zeitintervall (Z) zwischen zwei Messwerten (u(k)) aus einer Abtastrate oder einer Arbeitsfrequenz der Steuerungseinrichtung (10) ergibt.

2. Küchenmaschine (1) nach Anspruch 1, **dadurch gekennzeichnet, dass** die Überwachungseinrichtung (15) so konfiguriert ist, dass die Überwachungseinrichtung (15) aus dem Temperaturmesswert (T_{NTC}(k)) und dem elektrischen Messwert (u(k)) einen Störgrößenwert (š(k+1)) ermittelt, die mit einem Wärmeverlust korreliert, der durch ein Sieden einer Speise (20) in dem Topf (2) verursacht wird.

3. Küchenmaschine (1) nach dem vorhergehenden Anspruch, **dadurch gekennzeichnet, dass** die Überwachungseinrichtung (15) so konfiguriert ist, dass die Überwachungseinrichtung (15) den Störgrößenwert (š(k+1)) überwacht, um ein Überschreiten des Siedepunktes (SP) einer Speise (20) in dem Topf (2) zu detektieren.

4. Küchenmaschine (1) nach einem der zwei vorhergehenden Ansprüche, **dadurch gekennzeichnet, dass** die Überwachungseinrichtung (15) so konfiguriert ist, dass der Störgrößenwert (š(k+1)) idealerweise Null ist, wenn der Siedepunkt (SP) nicht überschritten ist.

5. Küchenmaschine (1) nach einem der drei vorhergehenden Ansprüche, **dadurch gekennzeichnet, dass** die Überwachungseinrichtung (15) so konfiguriert ist, dass die Überwachungseinrichtung (15) mithilfe eines Algorithmus oder eines Gleichungssystems ein thermisches System abbildet, bei dem eine Wärmezufuhr durch das Heizelement (3) zu einer Erhöhung der Temperatur (T_{SUR}, T_{MED}) abzüglich des Störgrößenwerts (š(k+1)) führt.

6. Küchenmaschine (1) nach dem vorhergehenden Anspruch, **dadurch gekennzeichnet, dass** die Überwachungseinrichtung (15) so konfiguriert ist, dass der Algorithmus oder das Gleichungssystem in zeitlich aufeinander folgenden Zyklen (k, k+1) angewendet wird.

7. Küchenmaschine (1) nach dem vorhergehenden Anspruch, **dadurch gekennzeichnet, dass** die Überwachungseinrichtung (15) so konfiguriert ist, dass der Temperaturmesswert (T_{NTC}(k)) eines aktuellen Zyklus (k) und der elektrische Messwert (u(k)) eines aktuellen Zyklus (k) sowie ein Störgrößenwert (š(k)), der im vorhergehenden Zyklus (k-1) ermittelt wurde, als Eingangsgrößen zum Ermitteln des Störgrößenwerts (š(k+1)) verwendet werden, die im aktuellen Zyklus (k) überwacht wird, um ein Überschreiten des Siedepunktes (SP) einer Speise (20) in dem Topf (2) zu detektieren.

8. Küchenmaschine (1) nach einem der vorhergehenden Ansprüche, **dadurch gekennzeichnet, dass** die Überwachungseinrichtung (15) eine Prädiktionswert-Ermittlungseinheit (16) umfasst, die einen Prädiktions-Störgrößenwert (š^{P}(k+1)), einen Prädiktions-Temperaturmesswert (Ť^{P}_{NTC}(k+1)), einen Prädiktions-Topftemperaturwert (Ť^{P}_{SUR}(k+1)) und/oder einen Prädiktions-Speisentemperaturwert (Ť^{P}_{MED}(k+1)) als Prädiktions-Ausgangsgrößen (x̂^{P}(k+1)) ermittelt.

9. Küchenmaschine (1) nach einem der vorhergehenden Ansprüche, **dadurch gekennzeichnet, dass** die Überwachungseinrichtung (15) eine Korrekturwert-Ermittlungseinheit (17) umfasst, die einen Korrektur-Störgrößenwert (š^{K}(k+1)), einen Korrektur-Temperaturmesswert (Ť^{K}_{NTC}(k+1)), einen Korrektur-Topftemperaturwert (Ť^{K}_{SUR}(k+1)) und/oder einen Korrektur-Speisentemperaturwert (Ť^{K}_{MED}(k+1)) als Korrektur-Ausgangsgrößen (x̂^{K}(k+1)) ermittelt.

10. Küchenmaschine (1) nach einem der vorhergehenden Ansprüche, **dadurch gekennzeichnet, dass** die Überwachungseinrichtung (15) eine Schätzwert-Ermittlungseinheit (18) umfasst, die einen geschätzten Störgrößenwert (š(k+1)), einen Schätz-Temperaturmesswert (Ť_{NTC}(k+1)), einen Schätz-Topftemperaturwert (Ť_{SUR}(k+1)) und/oder einen Schätz-Speisentemperaturwert (Ť_{MED}(k+1)) als Schätz-Ausgangsgrößen (x̂(k+1)) ermittelt.

11. Küchenmaschine (1) nach Anspruch 2 und dem vorhergehenden Anspruch, **dadurch gekennzeichnet, dass** der Störgrößenwert (š(k+1)) der geschätzte Störgrößenwert (š(k+1)) ist.

12. Küchenmaschine (1) nach den vier vorhergehenden Ansprüchen, **dadurch gekennzeichnet, dass** die Prädiktions-Ausgangsgrößen (x̂^{P}(k+1)) der Prädiktionswert-Ermittlungseinheit (16) und/oder die Korrektur-Ausgangsgrößen (x̂^{K}(k+1)) der Korrekturwert-Ermittlungseinheit (17) die Eingangsgrößen für die Schätzwert-Ermittlungseinheit (18) bilden.

13. Küchenmaschine (1) nach den Ansprüchen 8, 9 und 11, **dadurch gekennzeichnet, dass** der Störgrößenwert (š(k+1)) einer Summe des Prädiktions-Störgrößenwerts (š^{P}(k+1)) und des Korrektur-Störgrößenwerts (š^{K}(k+1)) entspricht.

14. Küchenmaschine (1) nach einem der vorhergehenden Ansprüche, **dadurch gekennzeichnet, dass** die Überwachungseinrichtung (15) eine Überwachungseinheit (19) umfasst, die so konfiguriert ist, dass die Überwachungseinheit (19) den Störgrößenwert (š(k+1)) zur Detektion eines Überschreitens des Siedepunkts (SP) überwacht und/oder auf Basis des Störgrößenwerts (š(k+1)) eine Dampfrate ermittelt.

15. Verfahren zum Überwachen einer Zubereitung einer Speise (20) in einem Topf (2) mithilfe einer Küchenmaschine (1), die den Topf (2), ein Heizelement (3) zum Erhitzen des Topfes (2) oder einer Speise (20) in dem Topf (2) und einen Temperatursensor (4) zum Ermitteln einer Temperatur des Topfes (2) oder einer Speise (20) in dem Topf (2) umfasst, mit folgenden Schritten:
- eine Überwachungseinrichtung (15) der Küchenmaschine (1) detektiert auf Basis eines Temperaturmesswertes (T_{NTC}(k)) des Temperatursensors (4) und eines elektrischen Wertes (u(k)) der Energiezufuhr zum Heizelement (3), durch den die Wärmezufuhr durch das Heizelement (3) berücksichtigt wird, ein Überschreiten eines Siedepunktes (SP) einer Speise (20) in dem Topf (2), und/oder
- die Überwachungseinrichtung (15) der Küchenmaschine (1) ermittelt auf Basis des Temperaturmesswertes (T_{NTC}(k)) des Temperatursensors (4) und des elektrischen Wertes (u(k)), der von einer Energiezufuhr zum Heizelement (3) abhängt, eine Dampfrate einer Speise (20) in dem Topf (2),
**dadurch gekennzeichnet, dass**
eine Steuerungseinrichtung (10) der Küchenmaschine (1) die Energiezufuhr zum Heizelement (2) steuert und der Wert (u(k)) der Energiezufuhr zum Heizelement (3) ein in einem definierten oder konstanten Zeitintervall (Z) an die Überwachungseinrichtung (15) bereitgestellter Messwert (u(k)) der elektrischen Leistung oder Stromstärke ist, wobei sich das Zeitintervall (Z) zwischen zwei Messwerten (u(k)) aus einer Abtastrate oder einer Arbeitsfrequenz der Steuerungseinrichtung (10) ergibt.

## Claims

1. Food processor (1) for preparing a food (20) in a pot (2), the food processor (1) comprising the pot (2), a heating element (3) for heating the pot (2) or a food (20) in the pot (2), and a temperature sensor (4) for determining a temperature of the pot (2) or a food (20) in the pot (2), wherein the food processor (1) comprises a monitoring device (15) configured such that the monitoring device (15) detects an exceeding of a boiling point (SP) of a food (20) in the pot (2) on the basis of a temperature measurement value (T_{NTC}(k)) of the temperature sensor (4) and an electrical value (u(k)) of the energy supply to the heating element (3) by which the heat supply by means of the heating element (3) is taken into account,
**characterized in that**
the food processor (1) comprises a control device (10) for controlling the energy supply to the heating element (2) and is configured such that the value (u(k)) of the energy supply to the heating element (3) is a measurement value (u(k)) of the electrical power or current provided to the monitoring device (15) in a defined or constant time interval (Z), wherein the time interval (Z) between two measurement values (u(k)) results from a sampling rate or an operating frequency of the control device (10).

2. Food processor (1) according to claim 1, **characterized in that** the monitoring device (15) is configured such that the monitoring device (15) determines from the temperature measurement value (T_{NTC}(k)) and the electrical measurement value (u(k)) a disturbance variable value (š(k+1)), which correlates with a heat loss caused by boiling of a food (20) in the pot (2).

3. Food processor (1) according to the preceding claim, **characterized in that** the monitoring device (15) is configured such that the monitoring device (15) monitors the disturbance variable value (š(k+1)) to detect an exceeding of the boiling point (SP) of a food (20) in the pot (2).

4. Food processor (1) according to one of the two preceding claims, **characterized in that** the monitoring device (15) is configured such that the disturbance variable value (š(k+1)) is ideally zero if the boiling point (SP) is not exceeded.

5. Food processor (1) according to one of the three preceding claims, **characterized in that** the monitoring device (15) is configured such that the monitoring device (15) represents, using an algorithm or a system of equations, a thermal system in which a heat supply through the heating element (3) leads to an increase in the temperature (T_{SUR}, T_{MED}) minus the disturbance variable value (š(k+1)).

6. Food processor (1) according to the preceding claim, **characterized in that** the monitoring device (15) is configured such that the algorithm or the system of equations is applied in temporally successive cycles (k, k+1).

7. Food processor (1) according to the preceding claim, **characterized in that** the monitoring device (15) is configured such that the temperature measurement value (T_{NTC}(k)) of a current cycle (k) and the electrical measurement value (u(k)) of a current cycle (k) and a disturbance variable value (š(k)), determined in the preceding cycle (k-1), are used as input variables for determining the disturbance variable value (š(k+1)) monitored in the current cycle (k) to detect an exceeding of the boiling point (SP) of a food (20) in the pot (2).

8. Food processor (1) according to one of the preceding claims, **characterized in that** the monitoring device (15) comprises a predicted value determination unit (16) which determines a predicted disturbance variable value (š^{P}(k+1)), a predicted temperature measurement value (Ť^{P}_{NTC}(k+1)), a predicted pot temperature value (Ť^{P}_{SUR}(k+1)) and/or a predicted food temperature value (Ť^{P}_{MED}(k+1)) as predicted output variables (x̂^{P}(k+1)).

9. Food processor (1) according to one of the preceding claims, **characterized in that** the monitoring device (15) comprises a correction value determination unit (17) which determines a correction disturbance variable value (š^{K}(k+1)), a correction temperature measurement value (Ť^{K}_{NTC}(k+1)), a correction pot temperature value (Ť^{K}_{SUR}(k+1)) and/or a correction food temperature value (Ť^{K}_{MED}(k+1)) as correction output variables (x̂^{K}(k+1)).

10. Food processor (1) according to one of the preceding claims, **characterized in that** the monitoring device (15) comprises an estimated value determination unit (18) which determines an estimated disturbance variable value (š(k+1)), an estimated temperature measurement value (Ť_{NTC}(k+1)), an estimated pot temperature value (Ť_{SUR}(k+1)) and/or an estimated food temperature value (Ť_{MED}(k+1)) as estimated output variables (x̂(k+1)).

11. Food processor (1) according to claim 2 and the preceding claim, **characterized in that** the disturbance variable value (š(k+1)) is the estimated disturbance variable value (š(k+1)).

12. Food processor (1) according to the four preceding claims, **characterized in that** the predicted output variables of the predicted value determination unit (16) and/or the correction output variables (x̂^{K}(k+1)) of the correction value determination unit (17) form the input variables for the estimated value determination unit (18).

13. Food processor (1) according to the claims 8, 9, and 11, **characterized in that** the disturbance variable value (š(k+1)) corresponds to a sum of the predicted disturbance variable value (š^{P}(k+1)) and the correction disturbance variable value (š^{K}(k+1)).

14. Food processor (1) according to one of the preceding claims, **characterized in that** the monitoring device (15) comprises a monitoring unit (19) which is configured such that the monitoring unit (19) monitors the disturbance variable value (š(k+1)) for detecting an exceeding of the boiling point (SP) and/or determines a steam rate on the basis of the disturbance variable value (š(k+1)).

15. Method for monitoring a preparation of a food (20) in a pot (2) using a food processor (1) comprising the pot (2), a heating element (3) for heating the pot (2) or a food (20) in the pot (2), and a temperature sensor (4) for determining a temperature of the pot (2) or a food (20) in the pot (2), with the following steps:
- a monitoring device (15) of the food processor (1) detects an exceeding of a boiling point (SP) of a food (20) in the pot (2) on the basis of a temperature measurement value (T_{NTC}(k)) of the temperature sensor (4) and an electrical value (u(k)) of the energy supply to the heating element (3), by which the heat supply by means of the heating element (3) is taken into account and/or
- the monitoring device (15) of the food processor (1) determines a steam rate of a food (20) in the pot (2) on the basis of the temperature measurement value (T_{NTC}(k)) of the temperature sensor (4) and the electrical value (u(k)), which depends on an energy supply to the heating element (3),
**characterized in that**
a control device (10) of the food processor (1) controls the energy supply to the heating element (2) and the value (u(k)) of the energy supply to the heating element (3) is a measurement value (u(k)) of the electrical power or current provided to the monitoring device (15) in a defined or constant time interval (Z), wherein the time interval (Z) between two measurement values (u(k)) results from a sampling rate or an operating frequency of the control device (10)

## Revendications

1. Machine de cuisine (1) pour préparer un aliment (20) dans une casserole (2), dans laquelle la machine de cuisine (1) comprend la casserole (2), un élément chauffant (3) pour chauffer la casserole (2) ou un aliment (20) dans la casserole (2), et un capteur de température (4) pour déterminer une température de la casserole (2) ou d'un aliment (20) dans la casserole (2), dans laquelle la machine de cuisine (1) présente un dispositif de surveillance (15), qui est configuré de telle sorte que le dispositif de surveillance (15) détecte un dépassement d'un point d'ébullition (SP) d'un aliment (20) dans la casserole (2) sur la base d'une valeur de mesure de température (T_{NTC} (k)) du capteur de température (4) et d'une valeur électrique (u(k)) de l'apport d'énergie à l'élément chauffant (3), par laquelle l'alimentation en chaleur par l'élément chauffant (3) est prise en compte,
**caractérisée en ce que**
la machine de cuisine (1) comprend un dispositif de commande (10) pour commander l'apport d'énergie à l'élément chauffant (2) et est configuré de telle sorte que la valeur (u(k)) de l'apport d'énergie à l'élément chauffant (3) est une valeur de mesure (u(k)) de la puissance électrique ou de l'intensité de courant mise à disposition du dispositif de surveillance (15) dans un intervalle de temps (Z) défini ou constant, dans laquelle l'intervalle de temps (Z) entre deux valeurs de mesure (u(k)) résulte d'un taux d'échantillonnage ou d'une fréquence de travail du dispositif de commande (10).

2. Machine de cuisine (1) selon la revendication 1, **caractérisée en ce que** le dispositif de surveillance (15) est configuré de telle sorte que le dispositif de surveillance (15) détermine, à partir de la valeur de mesure de température (T_{NTC} (k)) et de la valeur de mesure électrique (u(k)), une valeur de grandeur perturbatrice (š(k+1)) qui corrèle avec une perte de chaleur qui est causée par une ébullition d'un aliment (20) dans la casserole (2).

3. Machine de cuisine (1) selon la revendication précédente, **caractérisée en ce que** le dispositif de surveillance (15) est configuré de telle sorte que le dispositif de surveillance (15) surveille la valeur de grandeur perturbatrice (š(k+1)) afin de détecter un dépassement du point d'ébullition (SP) d'un aliment (20) dans la casserole (2).

4. Machine de cuisine (1) selon l'une des deux revendications précédentes, **caractérisée en ce que** le dispositif de surveillance (15) est configuré pour que la valeur de grandeur perturbatrice (š(k+1)) soit idéalement nulle lorsque le point d'ébullition (SP) n'est pas dépassé.

5. Machine de cuisine (1) selon l'une des trois revendications précédentes, **caractérisée en ce que** le dispositif de surveillance (15) est configuré de telle sorte que le dispositif de surveillance (15) reproduit, à l'aide d'un algorithme ou d'un système d'équations, un système thermique dans lequel un apport de chaleur par l'élément chauffant (3) entraîne une augmentation de la température (T_{SUR}, T_{MED}) moins la valeur de grandeur perturbatrice (š(k+1)).

6. Machine de cuisine (1) selon la revendication précédente, **caractérisée en ce que** le dispositif de surveillance (15) est configuré de telle sorte que l'algorithme ou le système d'équations est appliqué dans des cycles (k, k+1) successifs dans le temps.

7. Machine de cuisine (1) selon la revendication précédente, **caractérisée en ce que** le dispositif de surveillance (15) est configuré de telle sorte que la valeur de mesure de température (T_{NTC}(k)) d'un cycle courant (k) et la valeur de mesure électrique (u(k)) d'un cycle courant (k) ainsi qu'une valeur de grandeur perturbatrice (š(k)), qui a été déterminée dans le cycle précédent (k-1), sont utilisées comme grandeurs d'entrée pour déterminer la valeur de grandeur perturbatrice (š(k+1)) qui est surveillée dans le cycle courant (k), afin de détecter un dépassement du point d'ébullition (SP) d'un aliment (20) dans la casserole (2).

8. Machine de cuisine (1) selon l'une quelconque des revendications précédentes, **caractérisée en ce que** le dispositif de surveillance (15) comprend une unité de détermination de valeur de prédiction (16) qui détermine une valeur de grandeur perturbatrice de prédiction (š^{P}(k+1)), une valeur de mesure de température de prédiction (Ť^{P}_{NTC}(k+1)), une valeur de température de casserole de prédiction (Ť^{P}_{SUR}(k+1)) et/ou une valeur de température d'aliment de prédiction (Ť^{P}_{MED}(k+1)) comme grandeurs de sortie de prédiction (ẋ^{P}(k+1)).

9. Machine de cuisine (1) selon l'une quelconque des revendications précédentes, **caractérisée en ce que** le dispositif de surveillance (15) comprend une unité de détermination de valeur de correction (17) qui détermine une valeur de grandeur perturbatrice de correction (š^{K}(k+1)), une valeur de mesure de température de correction (Ť^{K}_{NTC}(k+1)), une valeur de température de casserole de correction (Ť^{K}_{SUR}(k+1)) et/ou une valeur de température d'aliment de correction (Ť^{K}_{MED}(k+1)) comme grandeurs de sortie de correction (ẋ^{K}(k+1)).

10. Machine de cuisine (1) selon l'une quelconque des revendications précédentes, **caractérisée en ce que** le dispositif de surveillance (15) comprend une unité de détermination de valeur d'estimation (18) qui détermine une valeur de grandeur perturbatrice (š(k+1)) estimée, une valeur de mesure de température d'estimation (T_{NTC}(k+1)), une valeur de température de casserole d'estimation (T_{SUR}(k+1)) et/ou une valeur de température d'aliment d'estimation (T_{MED}(k+1)) comme grandeurs de sortie d'estimation (x(k+1)).

11. Machine de cuisine (1) selon la revendication 2 et la revendication précédente, **caractérisée en ce que** la valeur de grandeur perturbatrice (š(k+1)) est la valeur de grandeur perturbatrice (š(k+1)) estimée.

12. Machine de cuisine (1) selon les quatre revendications précédentes, **caractérisée en ce que** les grandeurs de sortie de prédiction (ẋ^{P}(k+1)) de l'unité de détermination de valeur de prédiction (16) et/ou les grandeurs de sortie de correction (ẋ^{K}(k+1)) de l'unité de détermination de valeur de correction (17) constituent les grandeurs d'entrée pour l'unité de détermination de valeur d'estimation (18).

13. Machine de cuisine (1) selon les revendications 8, 9 et 11, **caractérisée en ce que** la valeur de grandeur perturbatrice (š(k+1)) correspond à une somme de la valeur de grandeur perturbatrice de prédiction (š^{P}(k+1)) et de la valeur de grandeur perturbatrice de correction (š^{K}(k+1)).

14. Machine de cuisine (1) selon l'une des revendications précédentes, **caractérisée en ce que** le dispositif de surveillance (15) comprend une unité de surveillance (19) configurée de telle sorte que l'unité de surveillance (19) surveille la valeur de grandeur perturbatrice (š(k+1)) pour détecter un dépassement du point d'ébullition (SP) et/ou détermine un débit de vapeur sur la base de la valeur de grandeur perturbatrice (š(k+1)).

15. Procédé de surveillance d'une préparation d'un aliment (20) dans une casserole (2) à l'aide d'une machine de cuisine (1) qui comprend la casserole (2), un élément chauffant (3) pour chauffer la casserole (2) ou un aliment (20) dans la casserole (2) et un capteur de température (4) pour déterminer une température de la casserole (2) ou d'un aliment (20) dans la casserole (2), avec les étapes suivantes :
- un dispositif de surveillance (15) de la machine de cuisine (1) détecte, sur la base d'une valeur de mesure de température (T_{NTC}(k)) du capteur de température (4) et d'une valeur électrique (u(k)) de l'apport d'énergie à l'élément chauffant (3), par laquelle l'alimentation en chaleur par l'élément chauffant (3) est prise en compte, un dépassement d'un point d'ébullition (SP) d'un aliment (20) dans la casserole (2), et/ou
- le dispositif de surveillance (15) du Machine de cuisine (1) détermine un débit de vapeur d'un aliment (20) dans la casserole (2) sur la base de la valeur de mesure de température (T_{NTC}(k)) du capteur de température (4) et de la valeur électrique (u(k)), qui dépend d'un apport d'énergie à l'élément chauffant (3),
**caractérisé en ce que**
un dispositif de commande (10) de la machine de cuisine (1) commande l'apport d'énergie à l'élément chauffant (2) et la valeur (u(k)) de l'apport d'énergie à l'élément chauffant (3) est une valeur de mesure (u(k)) de la puissance électrique ou de l'intensité du courant mise à disposition du dispositif de surveillance (15) dans un intervalle de temps (Z) défini ou constant, dans lequel l'intervalle de temps (Z) entre deux valeurs de mesure (u(k)) résulte d'un taux d'échantillonnage ou d'une fréquence de travail du dispositif de commande (10).
